# EUROPEAN PATENT APPLICATION

(11) **EP 4 148 983 A1**
(43) Date of publication of application: **15.03.2023**
(21) Application number: 22797620.6
(22) Date of filing: 16.06.2022
(51) Int. Cl.: H02S 30/10

(54) **PHOTOVOLTAIC ASSEMBLY**

(30) Priority: 21.07.2021 CN 202110823569; 21.07.2021 CN 202121660565 U
(71) Applicant: Hengdian Group DMEGC Magnetics Co., Ltd., Jinhua, Zhejiang 322118 (CN)
(72) Inventor: LOU, Caoxin, Jinhua Zhejiang 322118 (CN); GUO, Shuai, Jinhua Zhejiang 322118 (CN); WANG, Tingting, Jinhua Zhejiang 322118 (CN); LI, Chunhui, Jinhua Zhejiang 322118 (CN); ZHAO, Lin, Jinhua, Zhejiang 322118 (CN)
(74) Representative: Cabinet Beaumont
(86) International application number: PCT/CN2022/099081
(87) International publication number: WO 2023/000874

(57) **Abstract**

Provided is a photovoltaic module. The photovoltaic module includes a frame structure and a laminate. The frame structure includes a body, a first connection portion, and an accommodation slot. The accommodation slot is disposed on a first sidewall of the body, and the laminate is accommodated in the accommodation slot. The first connection portion is further disposed on the first sidewall of the body, and the first connection portion and the accommodation slot are disposed opposite to each other. The first connection portion is configured to be inserted into a building or a bracket so that the connection performance between components is capable of being enhanced. The first connection portion is disposed, or both the first connection portion and the second connection portion are disposed, which is capable of providing more connection manners between photovoltaic modules and more connection manners between the photovoltaic module and an application environment, and improving the mechanical performance of the photovoltaic module.

## Description

This application claims priority to Chinese Patent Application No. 202110823569.8 filed with the China National Intellectual Property Administration (CNIPA) on Jul. 21, 2021 and Chinese Patent Application No. 202121660565.4 filed with the CNIPA on Jul. 21, 2021, the disclosures of which are incorporated herein by reference in their entireties.

### TECHNICAL FIELD

The present application relates to the field of photovoltaic technology, for example, a photovoltaic module.

### BACKGROUND

A photovoltaic module consists of a frame structure and a laminate. The photovoltaic module engages with the periphery of the laminate using a metal frame made of aluminum alloy. A main light-receiving surface in the laminate is defined as the front surface of the module to facilitate the reception of light. The aluminum alloy frame in the module mainly serves to support the laminate. A conventional frame structure consists of an upper structure, a middle structure, and a lower structure. The upper structure is used for engaging with the laminate, the middle structure is used for supporting the laminate to improve the bearing capacity of the photovoltaic module, and the lower structure is mainly used as a support and provided with a mounting structure that is used for the connection to a bracket. In the related art, the photovoltaic module is a relatively independent unit with a good load capacity and a stable structure. The photovoltaic module can meet necessary load requirements as long as the photovoltaic module is simply connected to the bracket, which has a certain advantage when used in a large-scale ground power station. However, with the further development of the industry, photovoltaic modules gradually enter the lives of residents, such as building-integrated photovoltaics, and portable photovoltaic products. Such products do not have a high requirement on the bearing capacity of a single module, and are more inclined to have a requirement on the overall bearing capacity after the module is integrated into a building. In addition, the requirements for the photovoltaic modules to be lightweight, portable, and foldable are getting higher and higher. With the diversified development of an application environment of the photovoltaic modules, the conventional frame structure of the single photovoltaic module cannot meet application requirements.

### SUMMARY

The present application provides a photovoltaic module that can improve connection applicability between the photovoltaic module and an application environment.

The photovoltaic module provided by the present application includes a frame structure and a laminate.

The frame structure includes a body, a first connection portion, and an accommodation slot, where the accommodation slot is disposed on a first sidewall of the body, the accommodation slot is configured to accommodate the laminate, and the first connection portion is disposed on the first sidewall of the body and opposite to the accommodation slot.

### BRIEF DESCRIPTION OF DRAWINGS

FIG. 1 is a structural view of a photovoltaic module of the present application;
FIG. 2 is a schematic view of a connection between a photovoltaic module and a bracket of the present application;
FIG. 3 is a schematic view of another connection between a photovoltaic module and a bracket of the present application;
FIG. 4 is a schematic view of a third connection between a photovoltaic module and a bracket of the present application;
FIG. 5 is a schematic view of a bent structure of a photovoltaic module of the present application;
FIG. 6 is a schematic view of another bent structure of a photovoltaic module of the present application;
FIG. 7 is a schematic view showing that frame structures of photovoltaic modules of the present application are joined by lapping each other;
FIG. 8 is a schematic view showing a derivative structure of a photovoltaic module of the present application;
FIG. 9 is a schematic view showing another derivative structure of a photovoltaic module of the present application;
FIG. 10 is a schematic view showing a third derivative structure of a photovoltaic module of the present application;
FIG. 11 is a schematic view showing a fourth derivative structure of a photovoltaic module of the present application;
FIG. 12 is a schematic view showing a fifth derivative structure of a photovoltaic module of the present application;
FIG. 13 is a schematic view showing a sixth derivative structure of a photovoltaic module of the present application;
FIG. 14 is a schematic view showing a seventh derivative structure of a photovoltaic module of the present application;
FIG. 15 is a schematic view showing an eighth derivative structure of a photovoltaic module of the present application; and
FIG. 16 is a schematic view showing a ninth derivative structure of a photovoltaic module of the present application.

### Reference list

- 1: laminate
- 101: front of the laminate
- 102: back of the laminate
- 2: frame structure
- 201: first connection portion
- 202: second connection portion
- 203: body
- 204: accommodation slot
- 205: connection hole

### DETAILED DESCRIPTION

The present application will be described below in detail in conjunction with the drawings. The embodiments described below are part, not all, of the embodiments of the present application.

In the description of the present application, the term "mounted", "connected to each other", or "connected" is to be construed in a broad sense as securely connected, detachably connected, or integrated; mechanically connected or electrically connected; directly connected to each other or indirectly connected to each other via an intermediary; or interconnected between two components. For those of ordinary skill in the art, meanings of the preceding terms in the present application can be understood according to actual situations.

The embodiments of the present application are described in detail below, and examples of the embodiments are illustrated in the drawings, where the same or similar reference numerals indicate the same or similar elements, or elements having the same or similar functions. The embodiments described below with reference to the drawings are exemplary, intended to explain the present application.

In a large-scale ground power station, a conventional frame structure of a photovoltaic module consists of an upper structure, a middle structure, and a lower structure. The upper structure is used for engaging with a laminate, the middle structure is used for supporting the laminate to improve the bearing capacity of the photovoltaic module, and the lower structure is mainly used as a support and provided with a mounting structure that is used for the connection to a bracket. Conventional photovoltaic modules have good load capacities and stability. However, with the development of the photovoltaic industry, photovoltaic products are not only used in large-scale ground power stations but also gradually enter the lives of residents. In particular, the photovoltaic products combined with buildings make modern buildings more intelligent and environmentally friendly. Building-integrated photovoltaics do not have a high requirement on the bearing capacity of a photovoltaic module and are more inclined to have a requirement on the overall bearing capacity after the module is integrated into a building. However, due to a complex and changeable structure of the building and the complexity of the application environment of the photovoltaic module, the conventional frame structure cannot meet the needs of social development. In the present application, a photovoltaic module is provided, where a first connection portion is disposed in a frame structure or both the first connection portion and a second connection portion are disposed in the frame structure, and the second connection portion having multiple connection angles is provided, thereby providing more connection manners between photovoltaic modules and more connection manners between the photovoltaic module and the application environment and better meeting a requirement of the building-integrated photovoltaics. For a photovoltaic module that does not require a high bearing capacity, a metal plate or a plate of an organic polymer material may further be bent to manufacture the frame structure. Compared with an aluminum alloy frame in the related art, the frame structure can have a reduced weight and requires no frame structure mold to be designed so that a production process is simplified and production efficiency is improved, thereby achieving the effect of reducing costs and increasing efficiency.

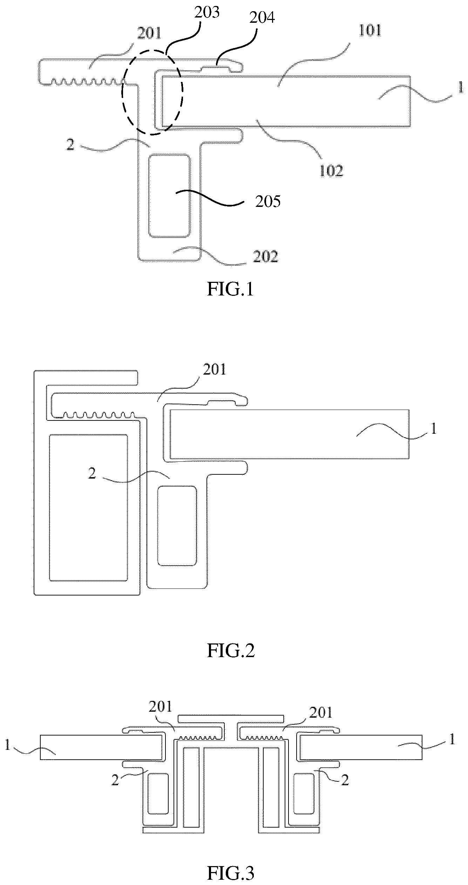

As shown in FIG. 1, the photovoltaic module includes a frame structure 2 and a laminate 1. The frame structure 2 includes a body 203, a first connection portion 201, and an accommodation slot 204. The left and right sides of the body 203 form a first sidewall of the body 203, and the upper and lower sides of the body 203 form a second sidewall of the body 203. The accommodation slot 204 is disposed on the first sidewall of the body 203, the laminate 1 in the photovoltaic module is accommodated in the accommodation slot 204, the first connection portion 201 is further disposed on the first sidewall of the body 203, and the first connection portion 201 and the accommodation slot 204 are disposed opposite to each other. Referring to FIGS. 2 and 3, the first connection portion 201 is configured to be inserted into a building or a bracket, which can improve the connection performance between the photovoltaic module and the bracket, and can support the photovoltaic module. In addition, the connection is performed through the insertion, which has the effects of sealing and waterproof. The first connection portion 201 and the accommodation slot 204 are disposed opposite to each other so that the light-receiving effect of a front 101 of the laminate can be prevented from being affected.

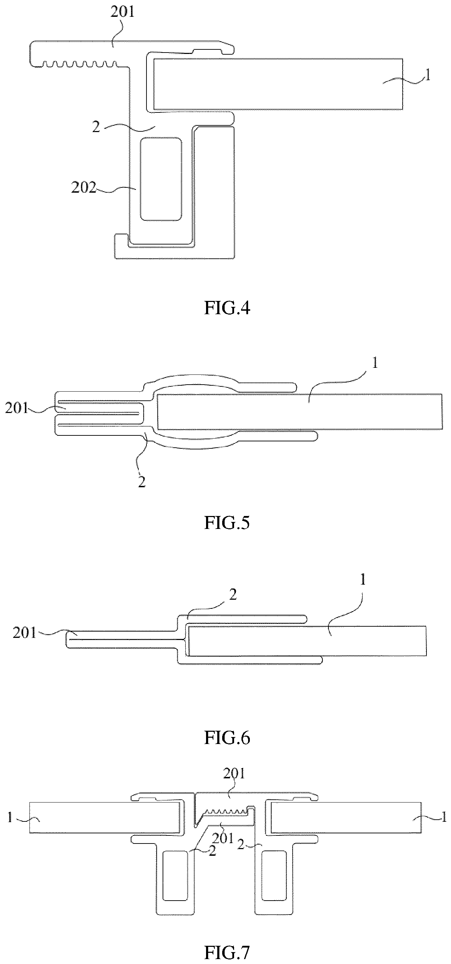

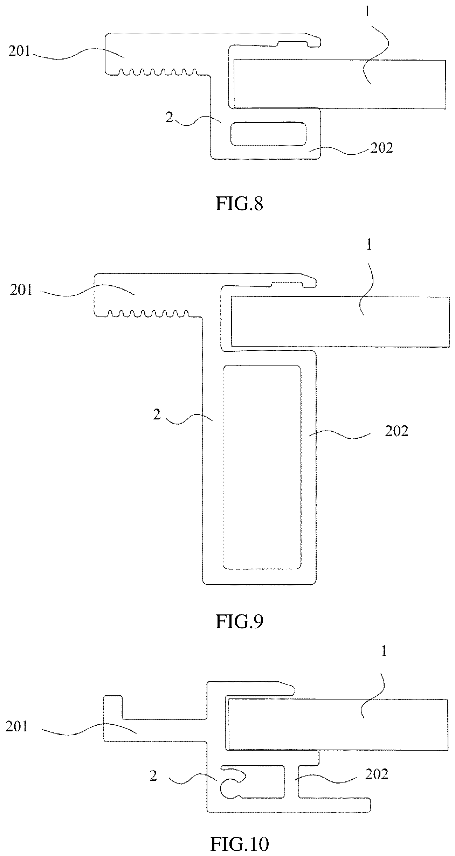

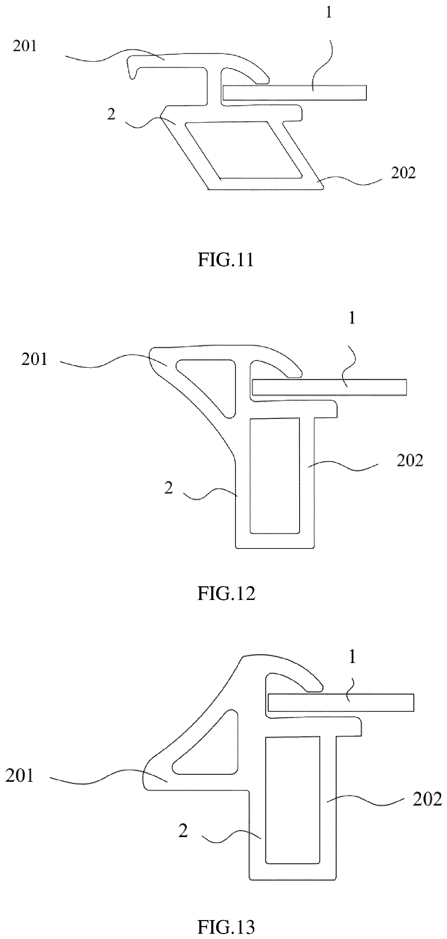

In an embodiment, referring to FIGS. 8 and 9, the first connection portion 201 may be rectangular and is configured to be directly inserted into a slit of the bracket. In another embodiment, referring to FIGS. 10 and 11, the first connection portion 201 may also be L-shaped. The L-shaped first connection portion 201 can reduce the overall weight of the frame structure 2 and can reduce the costs. In addition, after the first connection portion 201 is inserted into a connection slot of the bracket, the connection strength between the first connection portion 201 and the bracket can further be improved by the L-shaped slot. The L-shaped first connection portion 201 has the function of storing water, and the waterproof performance of the photovoltaic module can be improved after the L-shaped first connection portion 201 is connected to the bracket. In other embodiments, referring to FIGS. 12 and 13, the first connection portion 201 may also be arc-shaped and is configured to be connected to a bracket having an arc-shaped appearance. In other embodiments, referring to FIGS. 5 and 6, the first connection portion 201 may also be serpentine, and a serpentine structure can facilitate the insertion of the bracket into the first connection portion 201. The first connection portion 201 can enhance the connection performance between the photovoltaic module and the bracket, and has the function of supporting the photovoltaic module and a waterproof function. The first connection portion 201 and the accommodation slot 204 are disposed opposite to each other so that the first connection portion 201, and the first connection portion 201 connected to the bracket can be prevented from shielding the front 101 of the laminate and affecting the light-receiving effect of the laminate 1.

In an embodiment, with continued reference to FIG. 1, the first connection portion 201 further includes a connection side connected to the first sidewall, and a serrated structure may be disposed on the connection side. The serrated structure can improve a frictional force between the first connection portion 201 and the bracket and can improve the connection performance between the photovoltaic module and the bracket. In addition, the serrated structure also has the function of storing water and can improve the waterproof performance of the photovoltaic module. In an embodiment, an adhesive strip may be disposed between the first connection portion 201 and the bracket to improve the waterproof performance of the photovoltaic module. In other embodiments, a sealing strip may also be disposed between the first connection portion 201 and the bracket to improve the waterproof performance of the photovoltaic module.

In an embodiment, a top plane of the first connection portion 201 has a height similar to a height of the front 101 of the laminate, and a height difference between the top plane of the first connection portion 201 and the front 101 of the laminate is 0 mm to 30 mm, for example, the height difference may be 5 mm, 10 mm, 15 mm, 20 mm, 25 mm, or the like. If the top plane of the first connection portion 201 is much higher than the front 101 of the laminate, water is easily accumulated on the surface of the laminate 1, which affects the working performance of the laminate 1. Similarly, if the top plane of the first connection portion 201 is much lower than the front 101 of the laminate, the water is easily accumulated at the first connection portion 201, which affects the waterproof performance of the photovoltaic module.

Referring to FIG. 7, in an embodiment, the photovoltaic module may further include two frame structures 2, where first connection portions 201 in the two frame structures 2 are joined by lapping each other. In the related art, two photovoltaic modules are connected by the bracket, and a distance between two laminates 1 is at least a distance between the two first connection portions 201. With the connection manner in which the first connection portions 201 are joined by lapping each other, the distance between the two laminates 1 is the distance of one first connection portion 201, thereby greatly reducing the connection distance between the laminates 1 and improving the overall mechanical performance of the photovoltaic module. In an embodiment, a adhesive strip may be disposed between the surfaces of the two first connection portions 201 where the two first connection portions 201 are joined by lapping each other so that an advantageous waterproof effect can be achieved; and a sealing strip may also be disposed between the two first connection portions 201 to improve the waterproof performance of the photovoltaic module.

Optionally, with continued reference to FIG. 1, a second connection portion 202 may also be disposed in the frame structure 2 of the photovoltaic module. The second connection portion 202 is disposed on the second sidewall adjacent to the first sidewall of the body 203, and the second connection portion 202 faces away from the front 101 of the laminate, thereby preventing the second connection portion 202 from blocking light of the front 101 of the laminate and affecting the light-receiving effect of the laminate 1. In an embodiment, referring to FIG. 4, the second connection portion 202 may be interconnected with part of the connection frame of the whole bracket and fixed. In this embodiment, the second connection portion 202 is connected to the connection frame by a bolt. In other embodiments, the second connection portion 202 and the connection frame may also be connected to each other by a special snap, and the second connection portion 202 and the first connection portion 201 are both connected to the bracket so that a load pressure to which the photovoltaic module is subjected can be distributed into the bracket, thereby reducing a load requirement of the photovoltaic module itself. In another embodiment, second connection portions 202 may also be configured to be two adjacent frame structures 2 connected to the laminate 1. Since the laminate 1 is typically rectangular, the frame structure 2 needs to be disposed around the laminate 1. The second connection portions 202 may be connected by welding or a bolt so that two adjacent frame structures 2 are connected. Optionally, as shown in FIG. 1, a connection hole 205 may further be disposed in the second connection portion 202, and the second connection portions 202 of the two adjacent frame structures 2 may be connected to each other by an angle bracket. According to the characteristics of a connector, connection holes 205 of different shapes may further be provided to improve the connection strength between the two adjacent second connection portions 202.

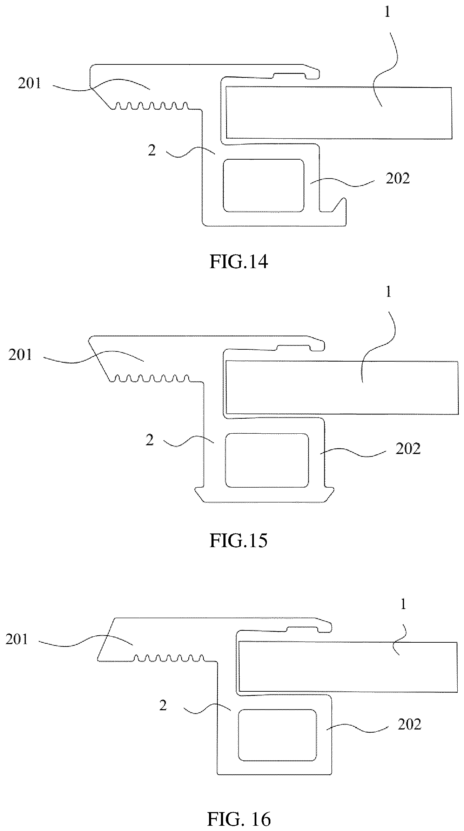

In this embodiment, the second connection portion 202 may be configured to be rectangular according to the structural characteristics of the bracket, which is suitable for a bracket with a relatively flat plane, and the height of the second connection portion 202 may further be changed according to the size and a mechanical performance requirement of the bracket. In an embodiment, referring to FIG. 14, the second connection portion 202 may also be configured to be L-shaped, and the L shape may engage with part of the whole bracket and also facilitates the interconnection between the second connection portions 202 of the two adjacent frame structures 2. In another embodiment, the second connection portion 202 may also be configured to be serpentine, which is suitable for the insertion of the second connection portion 202 into the part of the whole bracket. In other embodiments, the second connection portion 202 may also be configured to be arc-shaped, which facilitates the connection of the second connection portion 202 to the bracket that has the arc-shaped appearance on an outer surface.

Referring to FIG. 11, in an embodiment, the second connection portion 202 may be disposed obliquely, and the appearance of the photovoltaic module has a square frustum structure. The second connection portion 202 is disposed obliquely, which can block part of water to improve the waterproof performance of the photovoltaic module and can also make the photovoltaic module more aesthetic.

In an embodiment, strength and hardness requirements of the frame structure 2 are relatively high, and the frame structure 2 may be manufactured through extrusion with a pre-designed mold. With the development of the photovoltaic industry, a mechanical performance requirement of a photovoltaic product itself is not high. Therefore, in the application of the building-integrated photovoltaics or portable photovoltaic products, the metal plate or a plate of a polymer material may further be bent to manufacture the frame structure 2. As shown in FIGS. 6 and 7, a section of the frame structure 2 formed after being bent includes the first connection portion 201 or may also include both the first connection portion 201 and the second connection portion 202 according to requirements. A mold of the frame structure 2 needs to be manufactured for a conventional aluminum alloy frame structure 2. For a frame structure 2 having a relatively small size or a frame structure 2 having a relatively complex structure, the production efficiency is very low, relatively great difficulties exist, and the method for manufacturing the conventional frame structure 2 has limitations on the selection of materials. There are more materials for selection when the frame structure 2 is manufactured in a bending manner, and the frame structure 2 having the complex structure can also be manufactured more easily, thereby improving the connection applicability between the photovoltaic module and the application environment. In addition, the frame structure 2 manufactured using the bending method does not have a high requirement on the mechanical performance of the photovoltaic module. Therefore, a foaming agent or silica gel can be used for fixing and shaping the bent frame structure 2. In other embodiments, a connection may also be performed using a riveting method.

In an embodiment, the overall height of the frame is required to be 3mm, and a metal plate that has a thickness of 0.5 mm and has relatively good hardness and ductility may be used such as a steel plate, a copper plate, or a magnesium-aluminum-zinc alloy plate. The metal plate is cut and scribed according to the requirement of a connection bracket for a shape, and then the metal plate is bent according to the scribed lines so that the desired frame structure 2 is formed. For a photovoltaic module with a relatively high mechanical performance requirement, the bent frame structure 2 may be fixed by rivets, and for a photovoltaic module without the high mechanical performance requirement, the frame structure 2 may be fixed with silica gel between two layers of metal plates. In this embodiment, one metal plate is bent to form the frame with four sides corresponding to the periphery of the laminate 1. In other embodiments, one material plate may also be used for each side. Each metal plate is bent to form a frame structure 2, and then the frame structures 2 are spliced to form a complete set of frame structures 2. This manufacturing method can reduce bending and manufacturing difficulties. Especially for the frame structure 2 having a relatively large size and the relatively complex structure, the manufacturing difficulties can be effectively reduced and working efficiency can be improved.

In this embodiment, the first connection portion 201 is disposed in the frame structure 2 of the photovoltaic module or both the first connection portion 201 and the second connection portion 202 are disposed in the frame structure 2 of the photovoltaic module, and the second connection portion 202 having the multiple connection angles is provided so that the photovoltaic module can be well combined with the building and various complex application environments, thereby enlarging the application range of the photovoltaic module and providing more connection manners for the photovoltaic module. In addition, the waterproof performance of the photovoltaic module can also be well improved.

On the basis of the aluminum alloy frame structure 2 manufactured with the mold, the metal plate or the plate of the polymer material is bent to manufacture the frame structure 2. This processing method provides more methods for manufacturing the photovoltaic module, enlarges the selection range of materials of the frame structure 2, and reduces the weight of the frame structure 2. In addition, the frame structure 2 manufactured with the bending method is more suitable for a photovoltaic module having a relatively small size and a relatively complex structure, which can save time for manufacturing the mold, avoid difficulties in manufacturing the mold, improve the working efficiency, and achieve the effects of reducing the costs and increasing the efficiency.

## Claims

1. A photovoltaic module, comprising a frame structure (2) and a laminate (1),
wherein the frame structure (2) comprises a body (203), a first connection portion (201), and an accommodation slot (204), wherein the accommodation slot (204) is disposed on a first sidewall of the body (203), the accommodation slot (204) is configured to accommodate the laminate (1), and the first connection portion (201) is disposed on the first sidewall of the body (203) and opposite to the accommodation slot (204).

2. The photovoltaic module according to claim 1, wherein the first connection portion (201) is rectangular, L-shaped, serpentine, or arc-shaped.

3. The photovoltaic module according to claim 1, wherein the first connection portion (201) comprises a connection side that is connected to the first sidewall of the body (203) and has a serrated shape.

4. The photovoltaic module according to any one of claims 1 to 3, wherein a height difference between a top plane of the first connection portion (201) and a plane of a front (101) of the laminate is 0 mm to 30 mm, wherein the plane of the front (101) of the laminate is a light-receiving surface of the laminate (1).

5. The photovoltaic module according to any one of claims 1 to 3, wherein two frame structures (2) are provided, and first connection portions (201) of the two frame structures (2) are joined by lapping each other.

6. The photovoltaic module according to claim 1, wherein the frame structure (2) further comprises a second connection portion (202), wherein the second connection portion (202) is disposed on a side of a second sidewall of the body (203) facing away from the front (101) of the laminate, and the second sidewall is adjacent to the first sidewall.

7. The photovoltaic module according to claim 6, wherein the second connection portion (202) is rectangular, L-shaped, serpentine, or arc-shaped.

8. The photovoltaic module according to claim 6, wherein the second connection portion (202) is provided with a connection hole (205).

9. The photovoltaic module according to claim 6, wherein a plane in which the second connection portion (202) is located is disposed at an angle from a plane in which the first connection portion (201) is located.

10. The photovoltaic module according to claim 1 or 6, wherein the frame structure (2) is formed by bending or extrusion.
